# EUROPEAN PATENT APPLICATION

(11) **EP 4 175 047 A1**
(43) Date of publication of application: **03.05.2023**
(21) Application number: 21843548.5
(22) Date of filing: 16.07.2021
(51) Int. Cl.: H01M 50/449, H01M 50/446, H01M 10/052

(54) **SEPARATOR AND ELECTROCHEMICAL DEVICE COMPRISING SAME**

(30) Priority: 17.07.2020 KR 20200089204
(71) Applicant: LG Energy Solution, Ltd., Seoul 07335 (KR)
(72) Inventor: LEE, Sang-Joon, Daejeon 34122 (KR)
(74) Representative: Hoffmann Eitle
(86) International application number: PCT/KR2021/009215
(87) International publication number: WO 2022/015119

(57) **Abstract**

Disclosed is a separator including: a porous polymer substrate having a plurality of pores; and a porous coating layer disposed on at least one surface of the porous polymer substrate and including a plurality of core-shell type polymer particles, wherein the core-shell type polymer particles have a core portion including a super-absorbent polymer, and a shell portion surrounding the core portion and including a low-absorbent polymer having a melting point of 80°C or higher. An electrochemical device including the separator is also disclosed.

## Description

### TECHNICAL FIELD

The present disclosure relates to a separator and an electrochemical device including the same. Particularly, the present disclosure relates to a separator having excellent safety, when the temperature of a battery is increased, and an electrochemical device including the same.

The present application claims priority to Korean Patent Application No. 10-2020-0089204 filed on July 17, 2020 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte. However, such lithium-ion batteries cause safety-related problems, such as ignition and explosion, due to the use of an organic electrolyte, and have a disadvantage in that they are difficult to manufacture.

More recently, lithium-ion polymer batteries have improved such disadvantages of lithium-ion batteries and have been expected as one of the next-generation batteries. However, such lithium-ion polymer batteries still provide relatively lower capacity as compared to lithium-ion batteries, and particularly show insufficient discharge capacity at low temperature. Therefore, there is an imminent need for improving such a disadvantage.

Although such electrochemical devices have been produced from many production companies, safety characteristics thereof show different signs. Evaluation and securement of safety of such electrochemical devices are very important. The most important consideration is that electrochemical devices should not damage users upon their malfunction. For this purpose, safety standards strictly control ignition and smoke emission in electrochemical devices. With regard to safety characteristics of electrochemical devices, there is great concern about explosion when an electrochemical device is overheated to cause thermal runaway or perforation of a separator. Particularly, a polyolefin-based porous substrate used conventionally as a separator for an electrochemical device shows a severe heat shrinking behavior at a temperature of 100°C or higher due to its material property and a characteristic during its manufacturing process, including orientation, thereby causing a short-circuit between a cathode and an anode.

To solve the above-mentioned safety problems of an electrochemical device, there has been suggested a separator having a porous organic-inorganic coating layer formed by applying a mixture of an excessive amount of inorganic particles with a binder polymer onto at least one surface of a porous substrate having a plurality of pores.

In the case of the conventional polyolefin-based separators, shut-down occurs at a temperature ranging from 135°C to 160°C. Even when the porous organic-inorganic coating layer is introduced, it is difficult to control the above-defined temperature range, which may directly result in melt-down. As a result, it is difficult to ensure the safety of a battery.

Even when a separator causes shut-down, ignition of an electrolyte may occur due to an external heating source or the already increased temperature of a battery. Under these circumstances, there is still a need for a means for preventing this.

### DISCLOSURE

### Technical Problem

The present disclosure is designed to solve the problems of the related art, and therefore the present disclosure is directed to providing a separator having excellent safety when the temperature of a battery is increased.

The present disclosure is also directed to providing an electrochemical device including the separator.

### Technical Solution

In one aspect of the present disclosure, there is provided a separator according to any one of the following embodiments.

According to the first embodiment, there is provided a separator including:
a porous polymer substrate having a plurality of pores; and
a porous coating layer disposed on at least one surface of the porous polymer substrate and including a plurality of core-shell type polymer particles,
wherein the core-shell type polymer particles have a core portion including a super-absorbent polymer, and a shell portion surrounding the core portion and including a low-absorbent polymer having a melting point of 80°C or higher.

According to the second embodiment, there is provided the separator as defined in the first embodiment, wherein the super-absorbent polymer can absorb an electrolyte in an amount corresponding to 2-50 times of its own weight.

According to the third embodiment, there is provided the separator as defined in the first or the second embodiment, wherein the super-absorbent polymer is at least one crosslinked polymer selected from starch, cellulose, acrylic polymer, polyvinyl acetate and polyethylene glycol.

According to the fourth embodiment, there is provided the separator as defined in any one of the first to the third embodiments, wherein the low-absorbent polymer can absorb an electrolyte in an amount corresponding to 2 times or less of its own weight.

According to the fifth embodiment, there is provided the separator as defined in any one of the first to the fourth embodiments, wherein the low-absorbent polymer is a non-crosslinked polymer or crosslinked polymer including an acrylate polymer, an ester-based polymer, an olefin-based polymer, a vinyl fluoride-based polymer, a styrene-based polymer, a fluoroolefin-based polymer, a urethane-based polymer, a phenolic resin, an amide-based polymer, an aramid-based polymer, or two or more of them.

According to the sixth embodiment, there is provided the separator as defined in any one of the first to the fifth embodiments, wherein the low-absorbent polymer is a non-crosslinked polymer or crosslinked polymer including polymethyl (meth)acrylate, polyethylene terephthalate, polyethylene, polypropylene, polyethylene-co-propylene, polystyrene, polyvinyl fluoride (PVDF), polytetrafluoroethylene (PTFE), aramid, polycaprolactam (Nylon 6), poly(11-aminoundecanoic acid) (Nylon 11), polylauryl lactam (Nylon 12), polyhexamethylene adipamide (Nylon 6,6), polyhexamethylene azelamide (Nylon 6,9), polyhexamethylene sebacamide (Nylon 6,10), polyhexamethylene dodecanodiamide (Nylon 6,12), or two or more of them.

According to the seventh embodiment, there is provided the separator as defined in any one of the first to the sixth embodiments, wherein the core-shell type polymer particles have a weight ratio of the core portion to the shell portion of 84:16-40:60.

According to the eighth embodiment, there is provided the separator as defined in any one of the first to the seventh embodiments, wherein the ratio of the average diameter of the core portion to the average diameter of the core-shell type polymer particles is 10-90%.

According to the ninth embodiment, there is provided the separator as defined in any one of the first to the eighth embodiments, wherein the porous polymer substrate is a polyolefin-based porous polymer substrate.

According to the tenth embodiment, there is provided the separator as defined in any one of the first to the ninth embodiments, wherein the porous coating layer further includes at least one selected from: a binder polymer disposed partially or totally on the surface of the core-shell type polymer particles so that the core-shell type polymer particles may be interconnected and fixed; and inorganic particles.

According to the eleventh embodiment, there is provided the separator as defined in the tenth embodiment, wherein the binder polymer is polyvinylidene fluoride-co-hexafluoropropylene, polyvinylidene fluoride-co-trichloroethylene, polymethyl methacrylate, polybutyl acrylate, polybutyl methacrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or a mixture of two or more of them.

According to the twelfth embodiment, there is provided the separator as defined in the tenth or the eleventh embodiment, wherein the inorganic particles are inorganic particles having a dielectric constant of 5 or more, inorganic particles capable of transporting lithium ions, or a mixture thereof.

According to the thirteenth embodiment, there is provided an electrochemical device including a cathode, an anode and a separator interposed between the cathode and the anode, wherein the separator is the same as defined in any one of the first to the twelfth embodiments.

According to the fourteenth embodiment, there is provided the electrochemical device as defined in the thirteenth embodiment, which is a lithium secondary battery.

### Advantageous Effects

According to an embodiment of the present disclosure, when the temperature of an electrochemical device is increased, the shell portions of the core-shell type polymer particles in the porous coating layer of the separator are dissolved so that the core portions may be exposed, the super-absorbent polymer of the core portions absorbs the electrolyte to interrupt the migration of the lithium ions in the electrolyte, and the pores of the porous coating layer of the separator are blocked by the super-absorbent polymer swelled by the absorption of the electrolyte, resulting in a shut-down phenomenon. As a result, even when the battery temperature is increased, ignition of the electrolyte can be delayed or inhibited, thereby providing the electrochemical device with improved safety.

In addition, according to an embodiment of the present disclosure, the temperature at which the super-absorbent polymer works, i.e. the temperature at which a shut-down phenomenon occurs, can be controlled by adjusting the melting point (Tₘ) of the shell portion of the core-shell type polymer particles in the porous coating layer of the separator.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic sectional view illustrating the core-shell type polymer particles of the separator according to an embodiment of the present disclosure.
FIG. 2 is a schematic sectional view illustrating the separator according to an embodiment of the present disclosure.
FIG. 3 is a schematic sectional view illustrating the separator according to an embodiment of the present disclosure.
FIG. 4 is a schematic sectional view illustrating the separator according to an embodiment of the present disclosure, when the temperature is increased.
FIG. 5 is a schematic sectional view illustrating the separator according to an embodiment of the present disclosure, when the temperature is increased.
FIG. 6 is a graph illustrating a change in electrical resistance, when the temperature of the coin cell using each of the separators according to Examples 1-6 and Comparative Example 1 is increased.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In one aspect of the present disclosure, there is provided a separator including: a porous polymer substrate having a plurality of pores; and a porous coating layer disposed on at least one surface of the porous polymer substrate and including a plurality of core-shell type polymer particles, wherein the core-shell type polymer particles have a core portion including a super-absorbent polymer, and a shell portion surrounding the core portion and including a low-absorbent polymer having a melting point of 80°C or higher.

In the case of the conventional polyolefin-based separators, a shut-down phenomenon, i.e. blocking of the pores in the porous polymer substrate, occurs at a temperature ranging from 135°C to 160°C. Even when a porous organic-inorganic coating layer including an organic binder polymer and inorganic particles is introduced onto the polyolefin porous substrate, it is difficult to control the above-defined temperature range, which may result in melt-down rather. As a result, it is difficult to ensure the safety of a battery.

Therefore, there is a problem in that even when a separator causes shut-down, ignition of an electrolyte may occur due to an external heating source or the already increased temperature of a battery.

To solve the above-mentioned problem, the inventors of the present disclosure use core-shell type polymer particles including a super-absorbent polymer as a core portion to form the porous coating layer of a separator, and thus can provide a separator having higher safety as compared to the conventional separators.

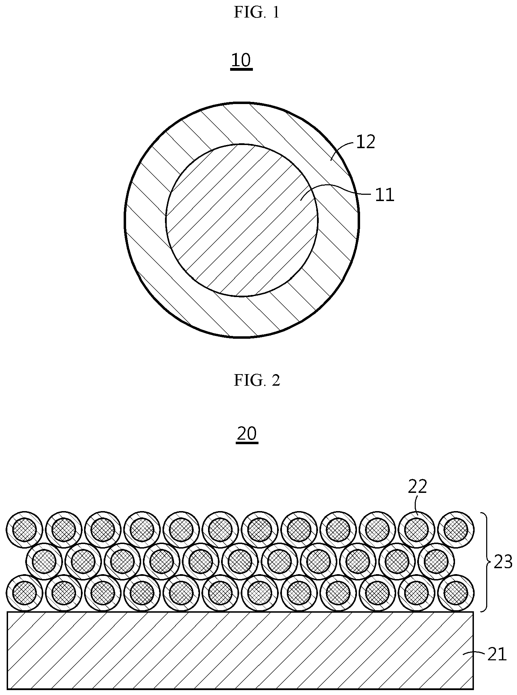

Referring to FIG. 1, the core-shell type polymer particles 10 of the separator according to an embodiment of the present disclosure have a core portion 11 including a super-absorbent polymer, and a shell portion 12 surrounding the core portion 11 and including a low-absorbent polymer having a melting point of 80°C or higher.

Referring to FIG. 2, the separator 20 according to an embodiment of the present disclosure is provided with a porous coating layer 23 disposed on one surface of a porous polymer substrate 21 and including core-shell type polymer particles 22.

The super-absorbent polymer (SAP) refers to a polymer capable of absorbing and holding a liquid in an amount corresponding to at least several times of its own weight even under normal pressure.

Particularly, the super-absorbent polymer according to an embodiment of the present disclosure can absorb an electrolyte in an amount corresponding to 2-50 times, or 10-20 times of its own weight and undergo volumetric swelling.

Particular examples of the super-absorbent polymer include at least one crosslinked polymer selected from starch, cellulose, acrylic polymer, polyvinyl acetate and polyethylene glycol. In other words, the super-absorbent polymer may be a crosslinked polymer in which at least one polymer selected from starch, cellulose, acrylic polymer, polyvinyl acetate and polyethylene glycol is crosslinked with each other. Herein, the super-absorbent polymer may be a crosslinked polymer of homopolymer, or a crosslinked polymer of two or more different polymers.

According to an embodiment of the present disclosure, the acrylic polymer as an example of the super-absorbent polymer may use a water-soluble ethylenically unsaturated monomer, and at least one monomer selected from the group consisting of an anionic monomer or a salt thereof, non-ionic hydrophilic group-containing monomer, amino group-containing unsaturated monomer and a quaternarized product thereof. A monomer composition means a solution that can be polymerized with the addition of a crosslinking agent and a polymerization initiator, after the water-soluble ethylenically unsaturated monomer is neutralized by using an alkaline compound, such as an alkali metal salt (e.g. sodium salt) or caustic soda. The monomer composition is subjected to thermal polymerization or photopolymerization to obtain a hydrous gel-like polymer, which, in turn, may be dried, pulverized and classified to obtain a powdery product. Such a super-absorbent polymer is generally a weakly crosslinked hydrophilic polymer. In a preferred embodiment, the super-absorbent polymer may include a hydrophilic group, such as a group selected from a carboxyl group, a phosphate group and a sulfonyl group. The water-soluble ethylenically unsaturated monomer may be at least one selected from the group consisting of: an anionic monomer of acrylic acid, methacrylic acid, maleic anhydride, fumaric acid, crotonic acid, itaconic acid, 2-acryloylethanesulfonic acid, 2-methacryloylethanesulfonic acid, 2-(meth)acryloylpropanesulfonic acid or 2-(meth)acrylamide-2-methylpropanesulfonic acid, and a salt thereof; a non-ionic hydrophilic group-containing monomer of (meth)acrylamide, N-substituted (meth)acrylamide, 2-hydroxyethyl (meth)acrylate, 2-hydroxypropyl (meth)acrylate, methoxypolyethylene glycol (meth)acrylate or polyethylene glycol (meth)acrylate; and an amino group-containing unsaturated monomer of (N,N)-dimethylaminoethyl (meth)acrylate or (N,N)-dimethylaminopropyl (meth)acrylamide and a quaternarized product thereof.

Particularly, acrylic acid or a salt thereof, such as at least partially neutralized acrylic acid and/or an alkali salt (e.g. sodium salt) thereof, may be used. When using such a monomer, it is possible to obtain a super-absorbent resin having better physical properties. When the alkali metal salt of acrylic acid is used as a monomer, acrylic acid may be neutralized with an alkaline compound, such as caustic soda (NaOH). Herein, the neutralization degree of the water-soluble ethylenically unsaturated monomer may be controlled to about 50-95%, preferably about 70-85%. The neutralization degree of the water-soluble ethylenically unsaturated monomer with Na⁺ preferably shows a pH of 5-7 after neutralization. When such a difference in concentration of sodium ion is formed by controlling the neutralization degree, osmosis occurs so that a large amount of water may be absorbed. In a particular embodiment, GS-401 is used as a super-absorbent polymer.

The shell portion surrounds the core portion and includes a low-absorbent polymer having a melting point of 80°C or higher. Herein, the low-absorbent polymer means a polymer that can absorb an electrolyte in an amount corresponding to 2 times or less, i.e. 0-2 times of its own weight. Therefore, the low-absorbent polymer includes a polymer having low or no electrolyte absorbability.

Since the shell portion does not interrupt the migration of the lithium ions in an electrolyte under normal environment, it should have low or no electrolyte absorbability. The low-absorbent polymer contained in the shell portion may have a melting point of 80°C or higher, 80-240°C, 140-240°C, 140-160°C, or 200-240°C. When the melting point of the polymer contained in the shell portion satisfies the above-defined range, it is possible to improve the battery stability under abnormal environment, while ensuring the battery performance under normal environment.

In an electrochemical device including the separator according to an embodiment of the present disclosure, the shell portions in the core-shell type polymer particles of the separator are dissolved, when the temperature of the electrochemical device is increased, so that the super-absorbent polymer of the core portions surrounded therewith may be exposed to the outside. As a result, the super-absorbent polymer absorbs the electrolyte in the electrochemical device to interrupt the migration of the ions in the electrolyte and to delay/inhibit ignition of the electrolyte, thereby providing the electrochemical device with improved safety.

The low-absorbent polymer contained in the shell portion may be a non-crosslinked polymer including an acrylate-based polymer, an ester-based polymer, an olefin-based polymer, a vinyl fluoride-based polymer, a styrene-based polymer, a fluoroolefin-based polymer, a urethane-based polymer, a phenolic resin, an amide-based polymer, an aramid-based polymer, or two or more of them; or a crosslinked polymer including an acrylate-based polymer, an ester-based polymer, an olefin-based polymer, a vinyl fluoride-based polymer, a styrene-based polymer, a fluoroolefin-based polymer, a urethane-based polymer, a phenolic resin, an amide-based polymer, an aramid-based polymer, or two or more of them.

According to an embodiment of the present disclosure, the shell portion may be a non-crosslinked polymer or crosslinked polymer including polymethyl (meth)acrylate, polyethylene terephthalate, polyethylene, polypropylene, polyethylene-co-propylene, polystyrene, polyvinyl fluoride (PVDF), polytetrafluoroethylene (PTFE), aramid, polycaprolactam (Nylon 6), poly(11-aminoundecanoic acid) (Nylon 11), polylauryl lactam (Nylon 12), polyhexamethylene adipamide (Nylon 6,6), polyhexamethylene azelamide (Nylon 6,9), polyhexamethylene sebacamide (Nylon 6,10), polyhexamethylene dodecanodiamide (Nylon 6,12), or two or more of them.

More particularly, the polymethyl (meth)acrylate may include poly(meth)acrylate, polyalkyl (meth)acrylate, polyalkyl acrylate-co-alkyl (meth)acrylate, polyfluoroalkyl (meth)acrylate, polyacrylonitrile, polyester, or two or more of them. Herein, each alkyl may be a C1-C30 alkyl, C1-C15 alkyl, C1-C10 alkyl, or a C1-C5 alkyl.

In the core-shell type polymer particles, the weight ratio of the core portion to the shell portion may be 84: 16-40:60, 80:20-45:55, or 75:25-50:50. In addition, in the core-shell type polymer particles, the weight ratio of the core portion to the shell portion may be 84:16 or more, 80:20 or more, or 75:25 or more, and 40:60 or less, 45:55 or less, or 50:50 or less. When the weight ratio of the core portion to the shell portion satisfies the above-defined range, the super-absorbent polymer of the core portion dose not absorb an electrolyte under normal environment, while it absorbs an electrolyte rapidly under abnormal environment to interrupt ion migration in the battery. In addition, in this case, the shell portion effectively covers the core portion to prevent gelling caused by the contact with a dispersion medium, when preparing a composition for forming a porous coating layer subsequently.

The core-shell type polymer particles may have an average diameter of 0.4-1.2 µm, 0.8-1.2 µm, or 0.4-0.6 µm. When the average diameter of the core-shell type polymer particles satisfies the above-defined range, it is possible to form a porous coating layer as a thin film. In addition, in this case, the core-shell type polymer particles may be mixed with inorganic particles homogeneously, when the porous coating layer further includes the inorganic particles.

According to the present disclosure, the average diameter (D50) of the core-shell type polymer particles and that of the inorganic particles as described hereinafter may be defined as the diameter at 50% in the dimeter distribution. According to the present disclosure, the average diameter (D50) of the core-shell type polymer particles and that of the inorganic particles may be determined through the observation with an electron microscope, for example, by using scanning electron microscopy (SEM) or field emission scanning electron microscopy (FE-SEM), or by using a laser diffraction method. More particularly, when determining the average diameter by using the laser diffraction method, the core-shell type polymer particles or the inorganic particles are dispersed in a dispersion medium, and then introduced to a commercially available laser diffraction particle size analyzer (e.g. Microtrac MT 3000). Then, ultrasonic waves with a frequency of about 28 kHz are irradiated thereto at an output of 60 W, and the average particle diameter (D50) at 50% in the diameter distribution obtained from the analyzer may be calculated.

According to an embodiment of the present disclosure, the ratio of the average diameter of the core portion to the average diameter of the core-shell type polymer particles may be 10% or more, 20% or more, 30% or more, 50% or more, 60% or more, or 66.6% or more, and 90% or less, 85% or less, or 80% or less. When the ratio of the average diameter of the core portion to the average diameter of the core-shell type polymer particles satisfies the above-defined range, the super-absorbent polymer of the core portion dose not absorb an electrolyte under normal environment, while it absorbs an electrolyte rapidly under abnormal environment to interrupt ion migration in the battery.

According to the present disclosure, the average diameter of the core-shell type polymer particles, average diameter of the inorganic particles and the average diameter of the core portion may be determined by using a particle size analyzer (e.g. laser particle size analyzer available from Malvern Co.). For example, after preparing the core portion, the average diameter of the core portion may be determined, and then the average particle diameter of the whole particle may be determined after preparing the shell portion.

Particularly, the porous polymer substrate may be a porous polymer film substrate or a porous polymer nonwoven web substrate.

The porous polymer film substrate may be a porous polymer film including polyolefin, such as polyethylene or polypropylene. Such a polyolefin porous polymer film substrate realizes a shut-down function at a temperature of 80-130°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and the porous polymer nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

There is no particular limitation in the thickness of the porous polymer substrate, the porous polymer substrate has a thickness of 1-100 µm, particularly 5-50 µm. Although there is no particular limitation in the size of the pores present in the porous polymer substrate and porosity, the pore size and porosity may be 0.01-50 µm and 10-95%, respectively.

The porous coating layer may further include at least one selected from: a binder polymer disposed partially or totally on the surface of the core-shell type polymer particles so that the core-shell type polymer particles may be interconnected and fixed; and inorganic particles.

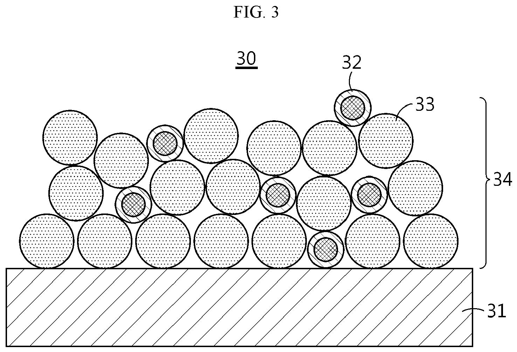

Referring to FIG. 3, the separator 30 according to an embodiment of the present disclosure includes a porous coating layer 34 disposed on one surface of a porous polymer substrate 31 and including core-shell type polymer particles 32, inorganic particles 33 and a binder polymer (not shown).

In the separator according to an embodiment of the present disclosure, the binder polymer used for forming the porous coating layer may be one used currently for forming a porous coating layer in the art. Particularly, a polymer having a glass transition temperature (T_{g}) of -200 to 200°C may be used. This is because such a polymer can improve the mechanical properties, such as flexibility and elasticity, of the finally formed porous coating layer. Such a binder polymer functions as a binder which connects and stably fixes the inorganic particles with one another, and thus contributes to prevention of degradation of mechanical properties of a separator having a porous coating layer.

In addition, it is not essentially required for the binder polymer to have ion conductivity. However, when using a polymer having ion conductivity, it is possible to further improve the performance of an electrochemical device. Therefore, a binder polymer having a dielectric constant as high as possible may be used. In fact, since the dissociation degree of a salt in an electrolyte depends on the dielectric constant of the solvent for the electrolyte, a binder polymer having a higher dielectric constant can improve the salt dissociation degree in an electrolyte. The binder polymer may have a dielectric constant ranging from 1.0 to 100 (measured at a frequency of 1 kHz), particularly 10 or more.

In addition to the above-mentioned function, the binder polymer may be characterized in that it is gelled upon the impregnation with a liquid electrolyte and thus shows a high degree of swelling. Thus, the binder polymer has a solubility parameter (i.e., Hildebrand solubility parameter) of 15-45 MPa^{1/2} or 15-25 MPa^{1/2} and 30-45 MPa^{1/2}. Therefore, hydrophilic polymers having many polar groups may be used more frequently as compared to hydrophobic polymers, such as polyolefins. When the solubility parameter is less than 15 MPa^{1/2} and more than 45 MPa^{1/2}, it is difficult for the binder polymer to be swelled with a conventional liquid electrolyte for a battery.

Non-limiting examples of the binder polymer include but are not limited to: polyvinylidene fluoride-co-hexafluoropropylene, polyvinylidene fluoride-co-trichloroethylene, polymethyl methacrylate, polybutyl acrylate, polybutyl methacrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or the like.

According to the present disclosure, non-limiting examples of the inorganic particles may include inorganic particles having a dielectric constant of 5 or more, inorganic particles capable of transporting lithium ions or a mixture thereof.

Non-limiting examples of the inorganic particles having a dielectric constant of 5 or more may include BaTiO₃, Pb(Zr,Ti)O₃ (PZT), Pb₁₋ₓLaₓZr_{1-y}Ti_{y}O₃ (PLZT), Pb(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, AlO(OH), Al₂O₃.H₂O, or a mixture thereof.

As used herein, the term `inorganic particles having lithium-ion transportability' refers to inorganic particles containing lithium elements, and not storing lithium but transporting lithium ions. Non-limiting examples of the inorganic particles having lithium-ion transportability include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), such as Li_{3.25}Ge_{0.25}P_{0.75}S₄, lithium nitride (LiₓN_{y}, 0 < x < 4, 0 < y < 2), such as Li₃N, SiS₂-based glass (LiₓSi_{y}S_{z}, 0 < x < 3, 0 < y < 2, 0 < z < 4), such as Li₃PO₄-Li₂S-SiS2, P₂S₅-based glass (LiₓP_{y}S_{z}, 0 < x <3, 0 < y < 3, 0 < z < 7), such as LiI-Li₂S-P₂S₅, or a mixture thereof.

Although there is no particular limitation in the thickness of the porous coating layer, the porous coating layer may have a thickness of 1-10 µm, particularly 1.5-6 µm. Also, the porosity of the porous coating layer is not particularly limited, but the porosity may be 35-65%, preferably.

The weight ratio of the core-shell type polymer particles to the inorganic particles may be 5:95-80:20, 20:80-80:20, or 50:50-80:20. When the weight ratio satisfies the above-defined range, it is possible to improve the battery stability by virtue of the core-shell type polymer particles, while ensuring the heat resistance of the porous coating layer.

For example, the weight ratio of the inorganic particles to the binder polymer may be 50:50-99:1, particularly 70:30-95:5. When the weight ratio of inorganic particles to the binder polymer satisfies the above-defined range, it is possible to prevent the problem of degradation of pore size and porosity of a coating layer, caused by an increased amount of binder polymer. It is also possible to solve the problem of weakening of peeling resistance of a porous coating layer, caused by a low amount of binder polymer.

The content of the core-shell type polymer particles may be 3 parts by weight or more, 5 parts by weight or more, or 10 parts by weight or more, and 78 parts by weight or less, 75 parts by weight or less, or 70 parts by weight or less, based on 100 parts by weight of the total weight of the porous coating layer.

The separator according to an embodiment of the present disclosure may further include other additives as ingredients of the porous coating layer, besides the inorganic particles and biner polymer.

According to an embodiment of the present disclosure, the porous coating layer may be an organic coating layer using organic slurry or an aqueous coating layer using aqueous slurry. Particularly, in the case of an aqueous coating layer, it is more advantageous in that thin film coating is facilitated and the resistance of the separator is reduced. In addition, when using organic slurry, it is required to select an organic solvent for slurry in which the low-absorbent polymer is not dissolved.

The method for manufacturing a separator according to an embodiment of the present disclosure may be discussed in the following two cases: a separator including a porous coating layer formed by using core-shell type polymer particles alone; and a separator further including a binder polymer and inorganic particles, besides core-shell type polymer particles.

First, a method for manufacturing a separator having a porous coating layer formed by using core-shell type polymer particles alone will be explained.

To form a porous coating layer, core-shell type polymer particles are added to and dispersed in a dispersion medium to prepare a composition for forming a porous coating layer.

The core-shell type polymer particles may be prepared by various methods, such as emulsion polymerization, a suspension polymerization, a massive polymerization, a solution polymerization or a bulk polymerization, known to those skilled in the art. For example, the core-shell type polymer particles may be prepared through an emulsion polymerization process.

Although there is no particular limitation in the process for coating the composition for forming a porous coating layer onto the porous polymer substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

Then, the porous polymer substrate coated with the composition for forming a porous coating layer may be dried in a dryer, such as an oven, to form a porous coating layer on at least one surface of the porous polymer substrate.

After coating the composition for forming a porous coating layer on the porous polymer substrate, the dispersion medium may be removed by carrying out drying at 90-180°C, particularly 100-150°C.

According to an embodiment of the present disclosure, the core-shell type polymer particles of the porous coating layer may form interstitial volumes, while they are in contact with one another. During the drying, the polymer particles contained in the shell portions of the core-shell type polymer particles function as a binder polymer so that the shell portions of the core-shell type polymer particles may be interconnected and fixed and the core-shell type polymer particles may be connected with the porous polymer substrate, thereby forming a porous coating layer.

Herein, the interstitial volume means a space defined by the core-shell type polymer particles that are in contact with one another substantially in a closely packed or densely packed structure of the core-shell type polymer particles. The interstitial volumes among the core-shell type polymer particles become vacant spaces to form pores.

Non-limiting examples of the dispersion medium that may be used herein include any one compound selected from acetone, tetrahydrofuran, methylene chloride, chloroform, dimethyl formamide, N-methyl-2-pyrrolidone, methyl ethyl ketone, cyclohexane, methanol, ethanol, isopropyl alcohol, propanol and water, or a mixture of two or more of them.

Next, a method for manufacturing a separator having a porous coating layer formed by further using a binder polymer and inorganic particles, besides core-shell type polymer particles, will be explained.

To form the porous coating layer, the binder polymer is dissolved in a solvent, and then the inorganic particles and the core-shell type polymer particles may be added thereto and dispersed therein to prepare a composition for forming a porous coating layer. The inorganic particles may be added after they are pulverized in advance to a predetermined average particle diameter. Otherwise, the inorganic particles and the core-shell type polymer particles may be added to a binder polymer solution, and then pulverized and dispersed, while controlling them to have a predetermined diameter by using a ball milling process, or the like.

The method for preparing the core-shell type polymer particles is the same as described above.

Although there is no particular limitation in the process for coating a composition for forming a porous coating layer onto the porous polymer substrate, it is preferred to use a slot coating or dip coating process. A slot coating process includes coating a composition supplied through a slot die onto the whole surface of a substrate and is capable of controlling the thickness of a coating layer depending on the flux supplied from a metering pump. In addition, a dip coating process includes dipping a substrate into a tank containing a composition to carry out coating and is capable of controlling the thickness of a coating layer depending on the concentration of the composition and the rate of removing the substrate from the tank. Further, in order to control the coating thickness more precisely, it is possible to carry out post-metering through a Mayer bar or the like, after dipping.

Then, the porous polymer substrate coated with the composition for forming a porous coating layer may be dried in a dryer, such as an oven, to form a porous coating layer on at least one surface of the porous polymer substrate.

According to an embodiment of the present disclosure, the binder of the porous coating layer attaches the inorganic particles and the core-shell type polymer particles to one another so that they may retain their binding states (i.e. the binder interconnects and fixes the inorganic particles and the core-shell type polymer particles), and the inorganic particles and the core-shell type polymer particles may be bound to the porous polymer substrate by the binder polymer. The inorganic particles and the core-shell type polymer particles of the porous coating layer may form interstitial volumes, while they are in contact with one another. Herein, the interstitial volume means a space defined by the inorganic particles and the core-shell type polymer particles that are in contact with one another substantially in a closely packed or densely packed structure of the inorganic particles and the core-shell type polymer particles. The interstitial volumes among the inorganic particles and the core-shell type polymer particles become vacant spaces to form pores. Herein, the polymer particles contained in the shell portions of the core-shell type polymer particles function as a binder polymer during the drying so that the shell portions of the core-shell type polymer particles may be interconnected and fixed and the core-shell type polymer particles may be connected with the porous polymer substrate, thereby forming a porous coating layer.

Non-limiting examples of the solvent that may be used herein include any one compound selected from acetone, tetrahydrofuran, methylene chloride, chloroform, dimethyl formamide, N-methyl-2-pyrrolidone, methyl ethyl ketone, cyclohexane, methanol, ethanol, isopropyl alcohol, propanol and water, or a mixture of two or more of them.

After coating the composition for forming a porous coating layer on the porous polymer substrate, the solvent may be removed by carrying out drying at 90-180°C, particularly 100-150°C.

In another aspect of the present disclosure, there is provided an electrochemical device including a cathode, an anode and a separator interposed between the cathode and the anode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer batteries, are preferred.

The two electrodes, cathode and anode, used in combination with the separator according to the present disclosure are not particularly limited, and may be obtained by allowing electrode active materials to be bound to an electrode current collector through a method generally known in the art. Among the electrode active materials, non-limiting examples of a cathode active material include conventional cathode active materials that may be used for the cathodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of an anode active material include conventional anode active materials that may be used for the anodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a cathode current collector include foil made of aluminum, nickel or a combination thereof. Non-limiting examples of an anode current collector include foil made of copper, gold, nickel, copper alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

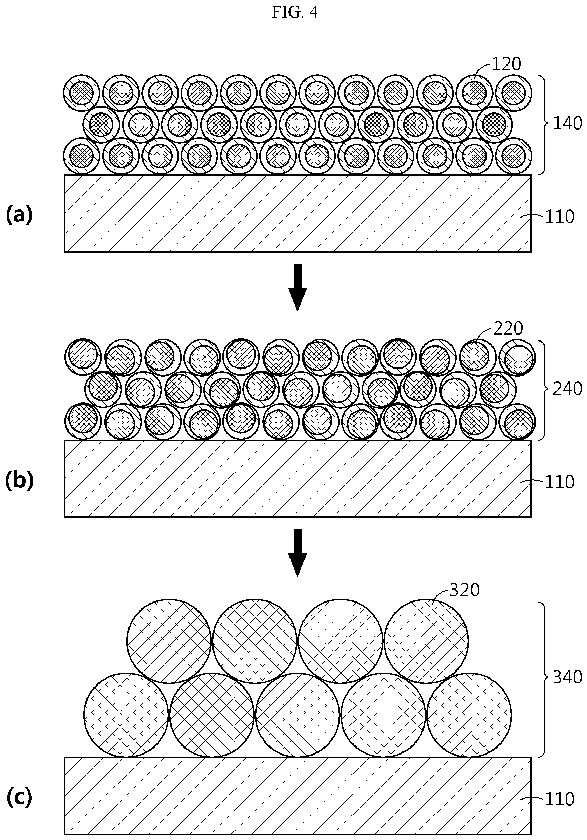

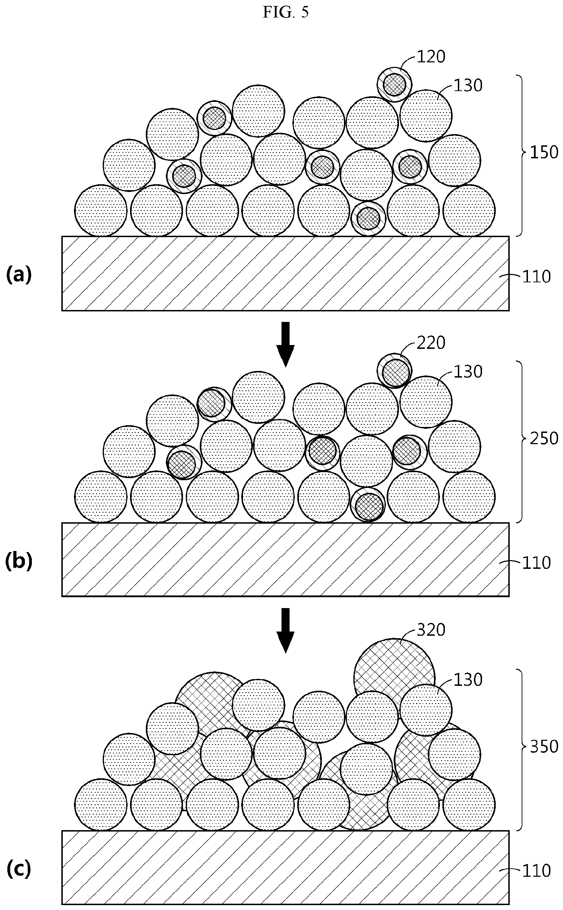

FIG. 4 and FIG. 5 are schematic sectional views each illustrating the separator according to an embodiment of the present disclosure, when the temperature is increased.

Particularly, each of FIG. 4 and FIG. 5 is a schematic view illustrating a change in the porous coating layer of the separator, when the temperature of an electrochemical device is increased, wherein the electrochemical device (e.g. lithium secondary battery) is obtained by interposing the separator according to an embodiment of the present disclosure between a cathode and an anode and injecting an electrolyte thereto.

Referring to portion (a) of FIG. 4, the separator according to an embodiment of the present disclosure has a porous coating layer 140 including core-shell type polymer particles 120 on one surface of a porous polymer substrate 110.

Referring to portion (b) of FIG. 4, when the temperature of the electrochemical device is increased and becomes a temperature equal to or higher than the melting point of the shell portions of the core-shell type polymer particles 240 in the porous coating layer 240 of the separator, the shell portions are molten and removed so that the core portions may be exposed to the outside and may be in contact with the electrolyte.

Referring to portion (c) of FIG. 4, the super-absorbent polymer of the exposed core portions absorbs the electrolyte and undergoes volumetric swelling so that the pores of the porous coating layer of the separator may be blocked, thereby causing a shut-down phenomenon.

Referring to portion (a) of FIG. 5, the separator according to an embodiment of the present disclosure has a porous coating layer 150 including core-shell type polymer particles 120, inorganic particles 130 and a binder polymer (not shown) on one surface of a porous polymer substrate 110.

Referring to portion (b) of FIG. 5, when the temperature of the electrochemical device is increased and becomes a temperature equal to or higher than the melting point of the shell portions of the core-shell type polymer particles 240 in the porous coating layer 250 of the separator, the shell portions are molten and removed so that the core portions may be exposed to the outside and may be in contact with the electrolyte.

Referring to portion (c) of FIG. 5, the super-absorbent polymer of the exposed core portions absorbs the electrolyte and undergoes volumetric swelling so that the pores of the porous coating layer of the separator may be blocked, thereby causing a shut-down phenomenon.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### <Preparation of Core-Shell Type Polymer Particles>

### Preparation Example 1

The core-shell type polymer particles have a core portion including a polyacrylic acid crosslinked polymer as a super-absorbent polymer, and a shell portion surrounding the core portion and including polyacrylate as a low-absorbent polymer having a melting point of 80°C or higher. The core-shell type polymer particles were prepared as follows.

First, 0.3 parts by weight of Ethylenediaminetetraacetic acid disodium salt (EDTA-Na2) powder as a neutralizing agent and 50 parts by weight of polyacrylic acid were introduced to 100 parts by weight of distilled water, and then agitation was carried out at room temperature for 1 hour. Then, 3 parts by weight of triethyl amine as a crosslinking agent was introduced thereto, and neutralization was carried out by agitating the resultant mixture at room temperature for 1 hour to prepare super-absorbent polymer core particles.

To 200 parts by weight (including 10 parts by weight of core particles) the prepared core particle composition, 7 parts by weight of methyl methacrylate, 3 parts by weight of n-butyl acrylate and 0.05 parts by weight of azobisisobutyronitrile (AIBN) as an initiator were introduced. After that, the resultant mixture was agitated at 70°C for 12 hours to obtain core-shell type polymer particles having a shell portion including polymethyl methacrylate-co-n-butyl acrylate as a low-absorbent polymer.

Herein, the core-shell type polymer particles had an average diameter of 300 nm, the core portion had an average diameter of 200 nm, and the low-absorbent polymer contained in the shell portion had a melting point of 85°C.

The melting point of the shell portion was determined as follows.

The melting point of the low-absorbent polymer contained in the shell portion was determined by using a differential scanning calorimeter (DSC, trade name: DSC 2920 available from TA instrument). Particularly, the polymer was heated to 220°C, the same temperature was maintained for 5 minutes, the polymer was cooled to 20°C, and then the temperature was increased again, wherein each of the heating rate and cooling rate was controlled to 10°C/min. The melting point of the low-absorbent polymer contained in each of the shell portions of the core-shell type polymer particles according to Preparation Examples 2 ad 3 was determined in the same manner as described above.

### Preparation Example 2

To 200 parts by weight of the core particle composition (including 10 parts by weight of core particles) prepared from Preparation Example 1, 8.5 parts by weight of methyl methacrylate, 1.5 parts by weight of n-butyl acrylate and 0.05 parts by weight of azobisisobutyronitrile (AIBN) as an initiator were introduced. After that, the resultant mixture was agitated at 70°C for 12 hours to obtain core-shell type polymer particles having a shell portion including polymethyl methacrylate-co-n-butyl acrylate as a low-absorbent polymer.

Herein, the core-shell type polymer particles had an average diameter of 300 nm, the core portion had an average diameter of 200 nm, and the low-absorbent polymer contained in the shell portion had a melting point of 105°C.

### Preparation Example 3

To 200 parts by weight of the core particle composition (including 10 parts by weight of core particles) prepared from Preparation Example 1, 1.5 parts by weight of methyl methacrylate, 0.25 parts by weight of n-butyl acrylate and 0.05 parts by weight of azobisisobutyronitrile (AIBN) as an initiator were introduced. After that, the resultant mixture was agitated at 70°C for 12 hours to obtain core-shell type polymer particles having a shell portion including polymethyl methacrylate-co-n-butyl acrylate as a low-absorbent polymer.

Herein, the core-shell type polymer particles had an average diameter of 250 nm, the core portion had an average diameter of 200 nm, and the low-absorbent polymer contained in the shell portion had a melting point of 105°C.

### Example 1

The core-shell type polymer particles according to Preparation Example 1, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 10:88:1:1 to prepare a composition for a porous coating layer. The composition for a porous coating layer had a solid content of 35 wt%.

The composition for a porous coating layer was coated on both surfaces of a polypropylene film (Senior Co., SD216C, thickness 16 µm, air permeability 310 Gurley, porosity 35%, weight 9.5 g/m²) as a porous polymer substrate, and then dried at 70°C for 30 minutes to obtain a separator having porous coating layers on both surfaces of the porous polymer substrate.

### Example 2

A separator was obtained in the same manner as Example 1, except that the core-shell type polymer particles according to Preparation Example 1, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 30:68:1:1 to prepare a composition for a porous coating layer.

### Example 3

A separator was obtained in the same manner as Example 1, except that the core-shell type polymer particles according to Preparation Example 1, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 50:48:1:1 to prepare a composition for a porous coating layer.

### Reference Example 1

The core-shell type polymer particles according to Preparation Example 1, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 98:0:1:1 to prepare a composition for a porous coating layer. However, the solid content was precipitated in the composition for a porous coating layer. Therefore, it was not possible to form porous coating layers on both surfaces of the porous polymer substrate.

### Example 4

A separator was obtained in the same manner as Example 1, except that the core-shell type polymer particles according to Preparation Example 2, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 10:88:1:1 to prepare a composition for a porous coating layer.

### Example 5

A separator was obtained in the same manner as Example 1, except that the core-shell type polymer particles according to Preparation Example 2, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 30:68:1:1 to prepare a composition for a porous coating layer.

### Example 6

A separator was obtained in the same manner as Example 1, except that the core-shell type polymer particles according to Preparation Example 2, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 50:48: 1: 1 to prepare a composition for a porous coating layer.

### Reference Example 2

The core-shell type polymer particles according to Preparation Example 2, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 70:28: 1: 1 to prepare a composition for a porous coating layer. However, the solid content was precipitated in the composition for a porous coating layer. Therefore, it was not possible to form porous coating layers on both surfaces of the porous polymer substrate.

### Reference Example 3

The core-shell type polymer particles according to Preparation Example 2, alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 98:0:1:1 to prepare a composition for a porous coating layer. However, the solid content was precipitated in the composition for a porous coating layer. Therefore, it was not possible to form porous coating layers on both surfaces of the porous polymer substrate.

### Reference Example 4

The core-shell type polymer particles according to Preparation Example 3 was in contact with water to prepare a composition for a porous coating layer, but gelling occurred. It is thought that this is because the shell portion has an insufficient polymer content.

### Comparative Example 1

A separator was obtained in the same manner as Example 1, except that the core-shell type polymer particles according to Preparation Example 1 were not used, and alumina particles (AES 11 (D50: 500 nm), Sumitomo Co.) as inorganic particles, acrylic latex (TOYOCHEM Co., CSB-130) as a binder polymer and carboxymethyl cellulose (GL Chem, SG-L02) as a binder polymer and a dispersant were mixed with water as a dispersion medium at a weight ratio of 98:1:1 to prepare a composition for a porous coating layer.

### Evaluation of Characteristics

Each of the separators according to Examples 1-6 and Comparative Example 1 was evaluated in terms of characteristics. The results are shown in the following Table 1.

**[Table 1]**

| Item | Unit | Comp. Ex. 1 | Ex. 1 | Ex. 2 | Ex. 3 | Ex. 4 | Ex. 5 | Ex. 6 |
|---|---|---|---|---|---|---|---|---|
| Total thickness | µm | 20.5 | 20.3 | 20.3 | 20.1 | 20.6 | 20.5 | 20.6 |
| Thickness of porous coating layer | µm | 4.5 | 4.3 | 4.3 | 4.1 | 4.6 | 4.5 | 4.6 |
| Loading amount of porous coating layer | g/m² | 7.5 | 6.8 | 6.1 | 5.7 | 7.0 | 6.2 | 5.9 |
| Air permeability | Gurley | 350 | 510 | 590 | 1230 | 570 | 630 | 1510 |
| Peel strength | gf/15mm | 65 | 62 | 40 | 17 | 58 | 43 | 22 |
| Electrical resistance (ER) of coin cell | Ω | 1.2 | 1.8 | 2.1 | 2.9 | 1.7 | 2.0 | 3.1 |

In Table 1, the air permeability, peel strength and the electrical resistance (ER) of a coin cell were determined by the following methods.

### Air Permeability

The air permeability (Gurley) was determined by the method of ASTM D726-94. As used herein, Gurley refers to resistance against air flow and was determined by using a Gurley densometer. Herein, the result, i.e. Gurley value, is expressed as time (seconds), i.e. air permeation time, required for 100 cc of air to pass through 1 in² section of each of the separators according to Examples 1-6 and Comparative Example 1 under a pressure of 12.2 inH₂O.

### Peel Strength

Each of the separators according to Examples 1-6 and Comparative Example 1 was cut into a size of 15 mm X 100 mm. A double-sided adhesive tape was attached to a glass plate, and the porous coating layer surface of the separator was attached to the adhesive tape. Then, the end portion of the separator was mounted to a UTM instrument (LLOYD Instrument LF Plus), and force was applied at 180° and a rate of 300 mm/min. The force required for separating the porous coating layer from the porous polymer substrate was measured.

### Electrical Resistance (ER) of Coin Cell

Each of the separators according to Examples 1-6 and Comparative Example 1 and an electrolyte (ethylene carbonate (EC):diethyl carbonate (DEC) = 3:7, 1.0 M LiPF₆) were introduced into a coin cell casing to obtain a coin cell. Then, the AC resistance of each coin cell was measured at 25°C. The results are shown in Table 1. Herein, `AC resistance' is a resistance value measured at 1 KHz by electric impedance spectroscopy (EIS, available from Ametek Co.).

### Evaluation of Shut-Down Temperature

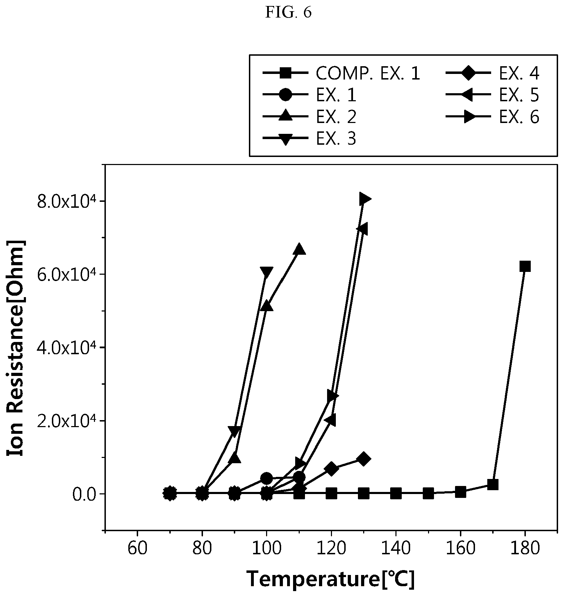

The coin cell obtained by the same method as described in the above part of `Electrical Resistance (ER) of Coin Cell' was stored in an oven heated from 70°C to 190°C at a rate of 10°C for 5 minutes and cooled for 30 minutes. Then, each coin cell was determined in terms of AC resistance. The results are shown in FIG. 6, wherein the difference between the resistance value determined at each temperature and the resistance value determined at 25°C is plotted in Y-axis. Herein, `AC resistance' is a resistance value measured at 1 KHz by electric impedance spectroscopy (EIS, available from Ametek Co.).

Referring to FIG. 6, the separator according to Comparative Example 1 shows an increase in resistance value after 170°C, which suggests shut-down is initiated at this point. Meanwhile, in the case of each of the separators according to Examples 1-6, the low-absorbent polymer contained in the shell portions of the core-shell type polymer particles is lost approximately at the melting point of the low-absorbent polymer so that the super-absorbent polymer of the core portions may be exposed to the outside, and thus absorbs the electrolyte and undergoes volumetric swelling, resulting in blocking of the pores of the porous coating layer and initiation of shut-down. It can be seen from the results that the shut-down temperature of each separator can be controlled by adjusting the melting point of the low-absorbent polymer contained in the shell portion.

## Claims

1. A separator comprising:
a porous polymer substrate having a plurality of pores; and
a porous coating layer disposed on at least one surface of the porous polymer substrate and comprising a plurality of core-shell type polymer particles,
wherein the core-shell type polymer particles have a core portion comprising a super-absorbent polymer, and a shell portion surrounding the core portion and comprising a low-absorbent polymer having a melting point of 80°C or higher.

2. The separator according to claim 1, wherein the super-absorbent polymer can absorb an electrolyte in an amount corresponding to 2-50 times of its own weight.

3. The separator according to claim 1, wherein the super-absorbent polymer is at least one crosslinked polymer selected from starch, cellulose, acrylic polymer, polyvinyl acetate and polyethylene glycol.

4. The separator according to claim 1, wherein the low-absorbent polymer can absorb an electrolyte in an amount corresponding to 2 times or less of its own weight.

5. The separator according to claim 1, wherein the low-absorbent polymer is a non-crosslinked polymer or crosslinked polymer comprising an acrylate polymer, an ester-based polymer, an olefin-based polymer, a vinyl fluoride-based polymer, a styrene-based polymer, a fluoroolefin-based polymer, a urethane-based polymer, a phenolic resin, an amide-based polymer, an aramid-based polymer, or two or more of them.

6. The separator according to claim 5, wherein the low-absorbent polymer is a non-crosslinked polymer or crosslinked polymer comprising polymethyl (meth)acrylate, polyethylene terephthalate, polyethylene, polypropylene, polyethylene-co-propylene, polystyrene, polyvinyl fluoride (PVDF), polytetrafluoroethylene (PTFE), aramid, polycaprolactam (Nylon 6), poly(11-aminoundecanoic acid) (Nylon 11), polylauryl lactam (Nylon 12), polyhexamethylene adipamide (Nylon 6,6), polyhexamethylene azelamide (Nylon 6,9), polyhexamethylene sebacamide (Nylon 6,10), polyhexamethylene dodecanodiamide (Nylon 6,12), or two or more of them.

7. The separator according to claim 1, wherein the core-shell type polymer particles have a weight ratio of the core portion to the shell portion of 84:16-40:60.

8. The separator according to claim 1, wherein the ratio of the average diameter of the core portion to the average diameter of the core-shell type polymer particles is 10-90%.

9. The separator according to claim 1, wherein the porous polymer substrate is a polyolefin-based porous polymer substrate.

10. The separator according to claim 1, wherein the porous coating layer further comprises at least one selected from: a binder polymer disposed partially or totally on the surface of the core-shell type polymer particles so that the core-shell type polymer particles may be interconnected and fixed; and inorganic particles.

11. The separator according to claim 10, wherein the binder polymer is polyvinylidene fluoride-co-hexafluoropropylene, polyvinylidene fluoride-co-trichloroethylene, polymethyl methacrylate, polybutyl acrylate, polybutyl methacrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or a mixture of two or more of them.

12. The separator according to claim 10, wherein the inorganic particles are inorganic particles having a dielectric constant of 5 or more, inorganic particles capable of transporting lithium ions, or a mixture thereof.

13. An electrochemical device comprising a cathode, an anode and a separator interposed between the cathode and the anode, wherein the separator is the same as defined in any one of claims 1 to 12.

14. The electrochemical device according to claim 13, which is a lithium secondary battery.
